# EUROPÄISCHE PATENTANMELDUNG

(11) **EP 3 799 238 A1**
(43) Veröffentlichungstag der Anmeldung: **31.03.2021**
(21) Anmeldenummer: 20208209.5
(22) Anmeldetag: 01.02.2013
(51) Int. Cl.: H02G 5/02, H02G 5/06, H02G 3/04

(54) **STROMSCHIENENSYSTEM**

(30) Priorität: 17.02.2012 DE 102012202435
(62) Teilanmeldung aus: 13704043.2
(71) Anmelder: Siemens Aktiengesellschaft, 80333 München (DE)
(72) Erfinder: Alefelder, Frank, 53819 Neunkirchen-Seelscheid (DE); Haar, Rainer, 53121 Bonn (DE)

(57) **Zusammenfassung**

Es wird ein Stromschienensystem zum Transport elektrischer Energie offenbart, wobei das Stromschienensystem mindestens ein erstes Segment und ein zweites Segment umfasst, wobei die Segmente jeweils mindestens eine erste Stromschiene mit einer ersten Querschnittsfläche und ein Haltestück umfassen, wobei die Stromschienen der Segmente von den jeweiligen Haltestücken gehalten und über eine Verbindung elektrisch miteinander verbunden sind und wobei auf die Stromschienen der jeweiligen Segmente (701;702) Halterungen (610;620) angebracht sind, an denen eine Abdeckung befestigt ist.

## Beschreibung

Elektrische Verteilsysteme können als Stromschienensysteme ausgebildet sein. Stromschienensysteme werden zum Transport und zur Verteilung elektrischer Energie eingesetzt. Typische Aufgaben eines Stromschienensystems sind beispielsweise die Verbindung von einem Transformator über einen Hauptverteiler zum Unterverteiler oder die Versorgung von Großverbrauchern. Ebenfalls werden Stromschienensysteme dazu verwendet, in Windenergieanlagen den im Turmkopf erzeugten Strom eines Generators zum Turmfuß zu leiten. Typischerweise sind die Stromschienen eines Stromschienensystems in einem Schienenkasten untergebracht, der verhindert, dass ein unerwünschter elektrischer Kontakt zwischen Stromschienen und Umgebung stattfinden kann. Der Schienenkasten ist dabei so dimensioniert, dass zum Einen die Abstände zur Verhinderung eines unerwünschten elektrischen Kontakts gewahrt sind, und zum Anderen die Stromschienen innerhalb des Schienenkastens durch natürliche oder erzwungene Konvektionen gekühlt werden.

Die Gehäuse der bisherigen Stromschienensysteme bilden mit den Stromschienen eine funktionale Einheit, wodurch sich Einschränkungen in der Dimensionierung der Stromschienenelemente sowie in der Belüftung des Systems ergeben. Speziell beim Energietransport über lange, vertikale Strecken, wie zum Beispiel in Hochhäusern oder in Windkraftanlagen, kommt es durch die eingeschränkte Ventilation beziehungsweise Konvektion innerhalb der Stromschienenkästen zu einem Wärmestau im oberen Bereich der installierten Stromschienensysteme.

Es ist Aufgabe der Erfindung, ein Stromschienensystem zur Verfügung zu stellen, bei dem das Gehäuse des Stromschienensystems funktional von den stromführenden Elementen getrennt ist.

Die Aufgabe wird gelöst gemäß Anspruch 1. Das Stromschienensystem zum Transport elektrischer Energie umfasst mindestens ein erstes Segment und ein zweites Segment, wobei die Segmente jeweils mindestens eine erste Stromschiene mit einer ersten Querschnittsfläche und ein Haltestück umfassen, wobei die Stromschienen der jeweiligen Segmente von den jeweiligen Haltestücken gehalten und über eine Verbindung elektrisch miteinander verbunden sind, wobei auf den Stromschienen der jeweiligen Segmente Halterungen angebracht sind, an denen eine Abdeckung befestigt ist. Das Gehäuse beziehungsweise der Schienenkasten wird somit mit möglichst wenigen Bauteilen an den Stromschienen selber angebracht.

Vorteilhaft ist hierbei, dass die Stromschienen flexibel in ihrer Größe anpassbar sind, da sie nicht in ihrer Dimensionierung durch ein Systemgehäuse begrenzt werden. Ebenfalls kann durch eine Vergrößerung der Abstände von Stromschienen zu einem potentiellen Gehäuse eine bessere Thermik im Gehäuse erzeugt werden. Durch diesen Effekt verbessert sich die Wärmeabfuhr und die Strombelastbarkeit der Stromschienen wird erhöht.

In einer Ausgestaltung umfassen die Segmente jeweils eine erste Stromschiene, die in Richtung des Stromflusses langgestreckt ausgebildet ist.

In einer weiteren Ausgestaltung umfassen die Segmente mehrere erste Stromschienen, die im jeweiligen Segment parallel zueinander angeordnet sind.

In einer weiteren Ausführungsform umfassen die Haltestücke eine erste Bolzenverbindung, wobei die ersten Stromschienen der jeweiligen Segmente dadurch miteinander elektrisch verbunden sind, dass die ersten Stromschienen an ihren Enden plan aneinanderliegen und von der ersten Bolzenverbindung eine Kraft aufgebracht wird, die die plan aneinanderliegenden Enden der ersten Stromschienen gegeneinander presst. Durch die Verbindung der ersten Stromschienen der jeweiligen Segmente mittels einer Bolzenverbindung können die jeweiligen Segmente besonders einfach elektrisch miteinander verbunden werden.

In einer weiteren Ausführungsform dienen die Haltestücke der Segmente als Haltemittel zur Befestigung des Stromschienensystems. Vorteilhaft hierbei ist, dass durch die Doppelfunktion der Haltestücke als Halterung für die ersten Stromschienen und als Haltemittel zur Befestigung des Stromschienensystems Material und Bauteile eingespart werden können.

In einer weiteren Ausführungsform umfassen die einzelnen Segmente des Stromschienensystems zusätzlich mindestens eine zweite Stromschiene mit einer zweiten Querschnittsfläche. Die erste Querschnittsfläche der ersten Stromschienen kann sich von der zweiten Querschnittsfläche der zweiten Stromschienen unterscheiden. Vorteilhaft hierbei ist, dass ein Haltestück Stromschienen mit ersten Querschnittsflächen und mit zweiten Querschnittsflächen gemeinsam trägt. Hier ist ebenfalls eine Ersparnis an Material und Bauelementen gegeben

Die Segmente des Stromschienensystems können mehrere zweite Schienen umfassen, die im jeweiligen Segment parallel zueinander angeordnet sind. Ebenfalls können in einem Segment die ersten Stromschienen und die zweiten Stromschienen parallel zueinander verlaufen.

In einer weiteren Ausgestaltung der Erfindung umfassen die Haltestücke eine zweite Bolzenverbindung, wobei die zweiten Stromschienen der jeweiligen Segmente dadurch miteinander elektrisch verbunden sind, dass die zweiten Stromschienen an ihren Enden plan aneinanderliegen und von der zweiten Bolzenverbindung eine Kraft aufgebracht wird, die die plan aneinanderliegenden Enden der zweiten Stromschienen gegeneinander presst. Vorteilhaft hierbei ist, dass mittels der zweiten Bolzenverbindung besonders einfach die zweiten Stromschienen miteinander elektrisch verbunden werden können.

In einer weiteren Ausgestaltung sind die ersten Stromschienen und die zweiten Stromschienen der jeweiligen Segmente durch jeweils eine einzige Bolzenverbindung verbunden.

In einer weiteren Ausgestaltung der Erfindung ist die Abdeckung nur an den von der Befestigung des Stromschienensystems abgewandten Seiten der Segmente angebracht.

In einer weiteren Ausgestaltung der Erfindung umfasst das Stromschienensystem mit ersten Stromschienen und zweiten Stromschienen zusätzlich einen Adapter, der die ersten Stromschienen mit einem ersten externen Stromschienensystem und die zweiten Stromschienen mit einem zweiten externen Stromschienensystem verbinden kann. Der Adapter kann ausgebildet sein, parallel zueinander verlaufende erste und zweite Stromschienen rechtwinkelig mit den Stromschienen der ersten und zweiten externen Stromschienensysteme zu verbinden.

Die Erfindung wird im Weiteren anhand der nachfolgenden Figuren beschrieben.
- Fig. 1A: Stromschienensystem, umfassend ein erstes Segment und ein zweites Segment, dargestellt in einer ersten Projektion,
- Fig. 1B: Segment eines Stromschienensystems mit ersten Stromschienen und zweiten Stromschienen, dargestellt in einer zweiten Projektion,
- Fig. 2A: Stromschienensystem, umfassend ein erstes Segment und ein zweites Segment mit einer Abdeckung,
- Fig. 2B: Detailansicht eines Haltestücks mit einer ersten und einer zweiten Bolzenverbindung,
- Fig. 3: Stromschienensystem, umfassend ein erstes und ein zweites Segment, dargestellt in einer dritten Projektion, und
- Fig. 4: Adapter für ein Stromschienensystem.

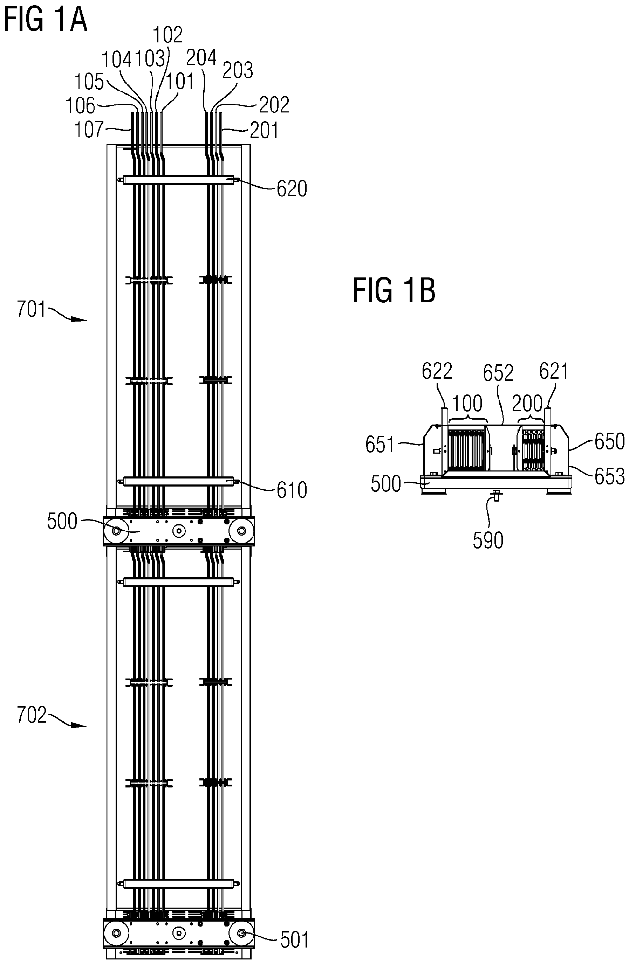

Fig. 1A zeigt ein Stromschienensystem zum Transport elektrischer Energie, dargestellt in einer ersten Projektion der Aufsicht auf das Stromschienensystem. Das Stromschienensystem umfasst ein erstes Segment 701 und ein zweites Segment 702. Die Segmente 701, 702 umfassen jeweils erste Stromschienen 101, 102, 103, 104 mit einer ersten Querschnittsfläche und ein Haltestück 500, 501, wobei die Stromschienen der jeweiligen Segmente 701, 702 von den jeweiligen Haltestücken 500, 501 gehalten und über eine Verbindung 510, 520 elektrisch miteinander verbunden sind. Gemäß Fig. 1A ist dem ersten Segment 701 das Haltestück 500 zugeordnet und dem zweiten Segment 702 das Haltestück 501. Die Verbindung 510, 520 verbindet die jeweiligen ersten Stromschienen 101, 102, 103, 104 der ersten und zweiten Segmente.

Die Stromschienen des erfindungsgemäßen Stromschienensystems sind langgestreckt in Richtung des Stromflusses ausgebildet. Gemäß der Darstellung in Fig. 1A bedeutet dies, dass der Stromfluss vertikal verläuft und somit ebenfalls die Stromschienen vertikal langgestreckt ausgebildet sind. Die einzelnen ersten Stromschienen 101, 102, 103, 104 der jeweiligen Segmente 701, 702 sind parallel zueinander angeordnet.

Fig. 1B zeigt das erfindungsgemäße Stromschienensystem, dargestellt in einer zweiten Projektion. Im Vergleich zur Fig. 1A ist die Darstellung der Fig. 1B senkrecht zum Stromfluss gewählt. Das Haltestück 500 hält die ersten Stromschienen 100 und weist des Weiteren ein Befestigungsmittel 590 auf, welches als Haltemittels zur Befestigung des Stromschienensystems dient. Befestigungsmittel 590 kann beispielsweise als Schraube ausgebildet sein, so dass die Segmente mittels der Schrauben 590 beispielsweise an einer Wand oder an einem Träger befestigt werden können.

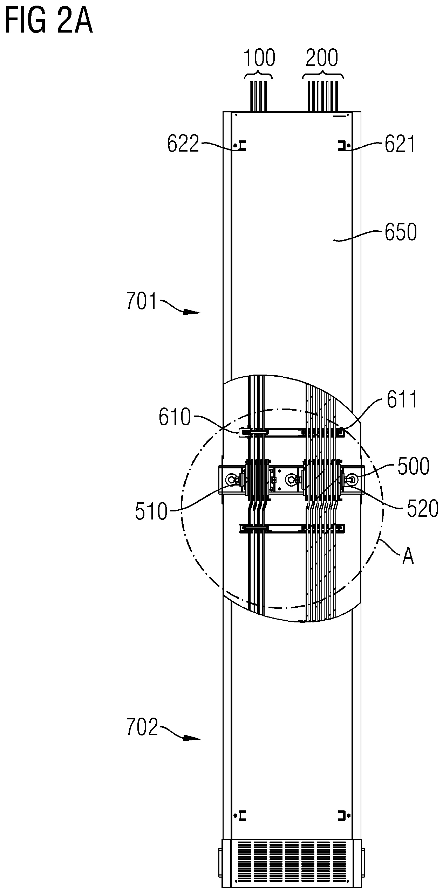

In Fig. 1A sind ebenfalls am Segment 701 Halterungen 610, 620 gezeigt, die direkt an den Stromschienen angebracht sind. An den Halterungen 610, 620 kann eine Abdeckung 650 befestigt werden, wie sie in Fig. 2A dargestellt ist. Die Halterungen 610, 620 können Arme 621, 622 aufweisen, die senkrecht zur Verlaufsrichtung der Stromschienen ausgebildet sind, und die die Abdeckung 650 tragen. Dabei können die Arme 621, 622 der Halterungen 610, 620 durch Öffnungen in der Abdeckung 650 hindurch greifen und diese dadurch fixieren. Zur Verhinderung des Lösens der Abdeckung 650 kann, nachdem die Abdeckung 650 am Stromschienensystem aufgelegt wurde, diese mittels Schrauben, Nieten oder anderer Befestigungsmittel fixiert werden.

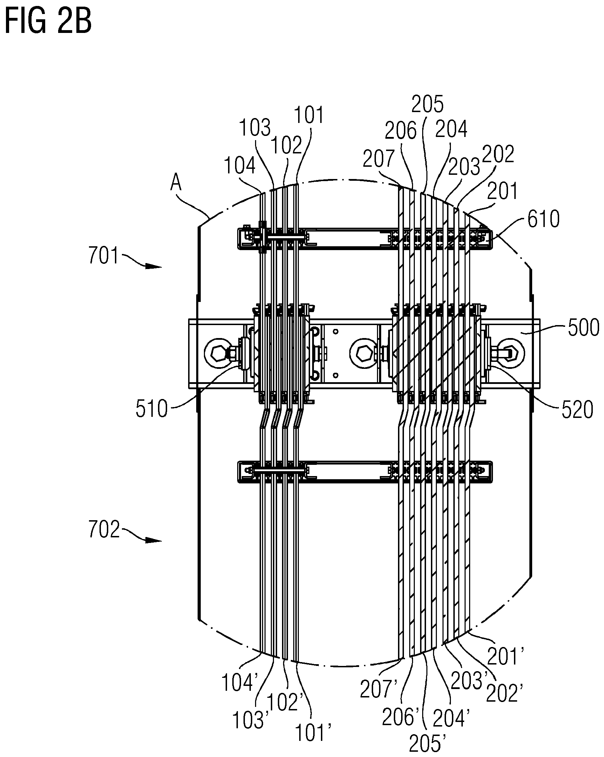

In Fig. 2B ist das Haltestück 500 näher dargestellt. Das Haltestück 500 verbindet das erste Segment 701 mit dem zweiten Segment 702. Das erste Segment 701 umfasst erste Stromschienen 101, 102, 103, 104. Das zweite Segment 702 umfasst erste Stromschienen 101', 102', 103', 104'. Die ersten Stromschienen der Segmente 701, 702 werden dadurch miteinander elektrisch verbunden, dass die ersten Stromschienen an ihren Enden plan aneinanderliegen und von einer ersten Bolzenverbindung 510 eine Kraft aufgebracht wird, die die plan aneinanderliegenden Enden der ersten Stromschienen gegeneinander presst. Die Enden der ersten Stromschienen der jeweiligen Segmente 701, 702 können an der einen Seite hakenförmig ausgebildet sein und an der anderen Seite mit einer Lochung versehen sein, durch die die Bolzenverbindung des Haltestücks 500, 501 verläuft. Durch diese Wahl der Gestaltung der Enden der ersten Stromschienen lassen sich die Segmente 701, 702 besonders leicht montieren. Nach Montage der Haltestücke 500, 501 können die Haken in die Bolzenverbindung eingeschwenkt und die Bolzenverbindung angezogen werden.

Das erste Segment 701 umfasst zusätzlich zweite Stromschiene 201, 202, 203, 204, 205, 206, 207 mit einer zweiten Querschnittsfläche, die sich von der ersten Querschnittsfläche der ersten Stromschienen 101, 102, 103, 104 unterscheiden kann. Die unterschiedlichen Querschnittsflächen der ersten Stromschienen 100 und zweiten Stromschienen 200 ist in Fig. 1B dargestellt. Die zweiten Stromschienen verlaufen ebenfalls in den jeweiligen Segmenten 701, 702 parallel zueinander. Entsprechend der Fig. 1A, 2A und 2B verlaufen die ersten Stromschienen 101, 102, 103, 104 und die zweiten Stromschienen 201, 202, 203, 204, 205, 206, 207 parallel zueinander.

Gemäß Fig. 2B umfasst das Haltestück 500 eine zweite Bolzenverbindung 520. Durch diese zweite Bolzenverbindung 520 werden die zweiten Stromschienen 201, 202, 203, 204, 205, 206, 207 des ersten Segments 701 mit den zweiten Stromschienen 201', 202', 203', 204', 205', 206', 207' des zweiten Segments 702 dadurch miteinander elektrisch verbunden, dass die zweiten Stromschienen an ihren Enden plan aneinanderliegen und von der zweiten Bolzenverbindung 520 eine Kraft aufgebracht wird, die die plan aneinanderliegenden Enden der zweiten Stromschienen gegeneinander presst.

Gemäß dem hier dargestellten Ausführungsbeispiel umfassen die Haltestücke 500, 501 die Verbindungen 510, 520. Es ist aber ebenso denkbar, dass die Verbindungen 510, 520, die die jeweiligen Stromschienen der Segmente 701, 702 elektrisch miteinander verbinden, getrennt von den Haltestücken 500, 501 ausgebildet sind. Räumlich können somit die Haltestücke 500, 501 beispielsweise in der Mitte der Stromschienen angeordnet sein, während sich die Verbindungen 510, 520 an den Enden der Stromschienen befinden.

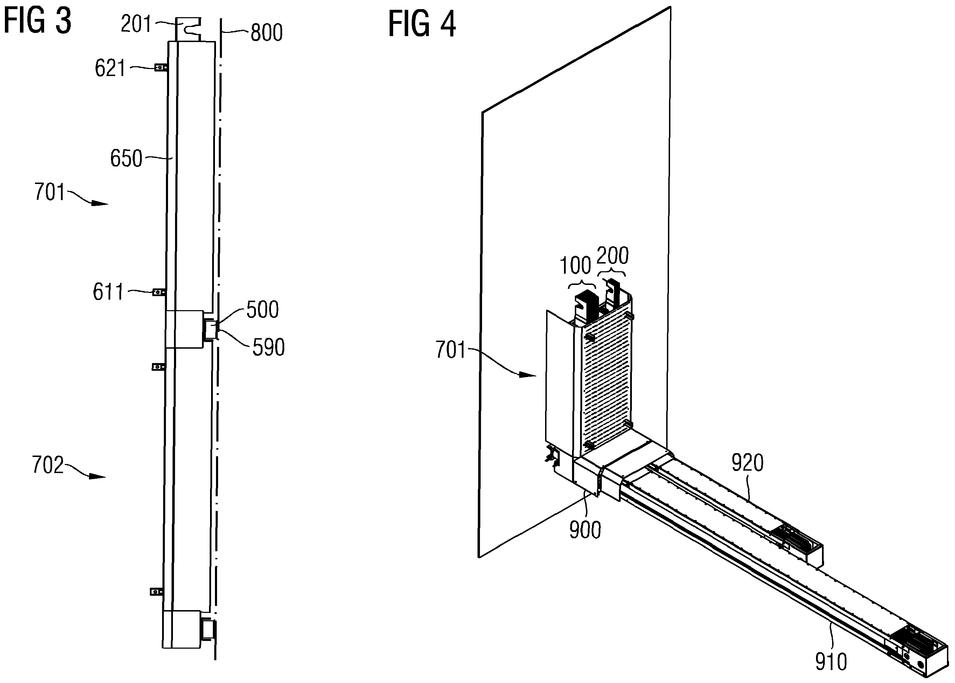

In Fig. 3 ist das erfindungsgemäße Stromschienensystem in einer dritten Projektion dargestellt. Gemäß der Fig. 1A ist die Darstellung um 90° perspektivisch gedreht eine seitliche Ansicht des Stromschienensystems. Das Stromschienensystem umfasst das erste Segment 701 und das zweite Segment 702. Die Stromschienen der Segmente sind über die Verbindung 510, 520 des Haltestücks 500 elektrisch miteinander verbunden. Das Haltestück 500 umfasst ein Haltemittel 590 zur Befestigung des Stromschienensystems. Beispielsweise kann über das Haltemittel 590 das Stromschienensystem an einer Wand 800 verschraubt werden. Das Stromschienensystem umfasst Halterungen 610, 620 mit Armen 611, 621, auf die eine Abdeckung 650 aufgeschoben und fixiert werden kann.

Die Abdeckung 650 kann so ausgebildet sein, dass sie nur an den von der Befestigung des Stromschienensystems abgewandten Seiten der Segmente 701, 702 angebracht ist. Gemäß Fig. 3 bedeutet dies, dass die Abdeckung sich nicht auf der unteren, der Wand 800 zugewandten Seite, befindet, sondern nur seitlich der Stromschienen und oberhalb der Stromschienen parallel zur Wand 800 verläuft. Gemäß Fig. 1B bedeutet dies, dass die Abdeckung 650 aus drei Segmenten besteht, den Segmenten 653 und 651, die ungefähr parallel zu den Stromschienen 100, 200 verlaufen und dem Segment 652, welches ungefähr parallel zu einer Wand 800 verläuft.

Die ersten Stromschienen 100 und zweiten Stromschienen 200 der jeweiligen Segmente 701, 702 können ebenfalls durch eine einzige Bolzenverbindung miteinander verbunden sein.

In Fig. 4 ist ein Adapter 900 dargestellt, der das erfindungsgemäße Stromschienensystem mit herkömmlichen Stromschienensystemen verbindet. Das erfindungsgemäße Stromschienensystem umfasst erste Stromschienen 100 und zweite Stromschienen 200, die beide mit dem Adapter 900 elektrisch verbunden sind. Als Verbindung können wiederum Bolzenverbindungen zum Einsatz kommen. Der Adapter 900 umfasst ebenfalls Anschlüsse für ein erstes, externes Stromschienensystem 910. Erstes, externes Stromschienensystem 910 weist die gleiche Anzahl an Stromschienen wie die Anzahl an ersten Stromschienen des erfindungsgemäßen Stromschienensystems auf mit denselben Querschnittsflächen. Ebenfalls verbindet der Adapter 900 die zweiten Stromschienen des erfindungsgemäßen Stromschienensystems mit einem zweiten, externen Stromschienensystems 920. Beim zweiten, externen Stromschienensystem 920 handelt es sich um ein Stromschienensystem mit der gleichen Anzahl an Stromschienen wie die Anzahl an zweiten Stromschienen des erfindungsgemäßen Stromschienensystems. Ebenfalls sind die Querschnittsflächen der zweiten Stromschienen des erfindungsgemäßen Stromschienensystems und der Stromschienen des zweiten, externen Stromschienensystems identisch.

Der Adapter 900 kann so ausgebildet sein, dass er einen rechtwinkeligen Anschluss zwischen dem erfindungsgemäßen Stromschienensystem und dem ersten und zweiten externen Stromschienensystemen ermöglicht.

Dadurch, dass im erfindungsgemäßen Stromschienensystem die Abdeckung 650 und die Stromschienen nicht mehr als Einheit betrachtet werden sondern als getrennte Elemente, ergeben sich unter Anderem folgende Vorteile. Die Stromschienen sind flexibel in der Größe anpassbar, weil sie nicht mehr in ihrer Dimensionierung durch ein Systemgehäuse begrenzt werden. Ebenso sind die Anzahl der Stromschienen und die Querschnittsfläche der Stromschienen variabel und können auf die einzelne Applikation abgestimmt werden. Beispielsweise kann in einem Gehäuse ein Stromschienensystem unterbracht werden mit vier ersten Stromschienen und sieben zweiten Stromschienen. Durch eine Vergrößerung der Abstände von Stromschienen zur Abdeckung kann eine bessere Thermik in der Abdeckung erzeugt werden (Kaminwirkung). Durch diesen Effekt verbessert sich die Wärmeabfuhr und Strombelastbarkeit der Stromschienen wird erhöht. Durch das Zusammenfassen mehrerer Stromschienen mit unterschiedlichen Querschnittsflächen unter einer Abdeckung wird ein zusätzlicher Kostenvorteil erzeugt.

## Patentansprüche

1. Stromschienensystem zum Transport elektrischer Energie, wobei das Stromschienensystem mindestens ein erstes Segment (701) und ein zweites Segment (702) umfasst, **dadurch gekennzeichnet, dass** die Segmente (701; 702) jeweils mindestens eine erste Stromschiene (101, 101'; 102, 102'; 103, 103'; 104, 104') mit einer ersten Querschnittsfläche und ein Haltestück (500; 501) umfassen, wobei die Stromschienen der Segmente (701; 702) von den jeweiligen Haltestücken (500; 501) gehalten und über eine Verbindung (510; 520) elektrisch miteinander verbunden sind, wobei auf die Stromschienen der jeweiligen Segmente (701;702) Halterungen (610;620) angebracht sind, an denen eine Abdeckung (659) befestigt ist.

2. Stromschienensystem gemäß Anspruch 1, bei dem die Segmente (701; 702) jeweils eine erste Stromschiene (101, 101'; 102, 102'; 103, 103'; 104, 104') umfassen, die in Richtung des Stromflusses langgestreckt ausgebildet ist.

3. Stromschienensystem gemäß einem der Ansprüche 1 oder 2, bei dem die Segmente (701; 702) mehrere erste Stromschienen (101, 101'; 102, 102'; 103, 103'; 104, 104') umfassen, die im jeweiligen Segment (701; 702) parallel zueinander angeordnet sind.

4. Stromschienensystem gemäß einem der vorherigen Ansprüche, bei dem die Haltestücke (500; 501) eine erste Bolzenverbindung (510) umfassen, und wobei die ersten Stromschienen (101, 101'; 102, 102'; 103, 103'; 104, 104') der jeweiligen Segmente (701; 702) dadurch miteinander elektrisch verbunden sind, dass die ersten Stromschienen (101, 101'; 102, 102'; 103, 103'; 104, 104') an ihren Enden plan aneinanderliegen und von der ersten Bolzenverbindung (510) eine Kraft aufgebracht wird, die die plan aneinanderliegenden Enden der ersten Stromschienen (101, 101'; 102, 102'; 103, 103'; 104, 104') gegeneinander presst.

5. Stromschienensystem gemäß einem der vorherigen Ansprüche, bei dem die Haltestücke (500; 501) der Segmente (701; 702) als Haltemittel (590) zur Befestigung des Stromschienensystems dienen.

6. Stromschienensystem gemäß einem der vorherigen Ansprüche, bei dem die einzelnen Segmente (701; 702) zusätzlich mindestens eine zweite Stromschiene (201, 201'; 202, 202'; 203, 203'; 204, 204'; 205, 205'; 206, 206'; 207, 207') mit einer zweiten Querschnittsfläche umfasst.

7. Stromschienensystem gemäß Anspruch 6, bei dem sich die erste Querschnittsfläche der ersten Stromschienen (101, 101'; 102, 102'; 103, 103'; 104, 104') von der zweiten Querschnittsfläche der zweiten Stromschienen (201, 201'; 202, 202'; 203, 203'; 204, 204'; 205, 205'; 206, 206'; 207, 207') unterscheidet.

8. Stromschienensystem gemäß Anspruch 6 oder 7, bei dem die Segmente (701; 702) mehrere zweite Stromschienen (201, 201'; 202, 202'; 203, 203'; 204, 204'; 205, 205'; 206, 206'; 207, 207') umfassen, die im jeweiligen Segment (701; 702) parallel zueinander angeordnet sind.

9. Stromschienensystem gemäß Anspruch 6, 7 oder 8, bei dem die ersten Stromschienen (101, 101'; 102, 102'; 103, 103'; 104, 104') und die zweiten Stromschienen (201, 201'; 202, 202'; 203, 203'; 204, 204'; 205, 205'; 206, 206'; 207, 207') parallel zueinander verlaufen.

10. Stromschienensystem gemäß einem der Ansprüche 6 bis 9, bei dem die Haltestücke (500; 501) eine zweite Bolzenverbindung (520) umfassen, und wobei die zweiten Stromschienen (201, 201'; 202, 202'; 203, 203'; 204, 204'; 205, 205'; 206, 206'; 207, 207') der jeweiligen Segmente (701; 702) dadurch miteinander elektrisch verbunden sind, dass die zweiten Stromschienen (201; 202; 203; 204; 205; 206; 207) an ihren Enden plan aneinanderliegen und von der zweiten Bolzenverbindung (520) eine Kraft aufgebracht wird, die die plan aneinanderliegenden Enden der zweiten Stromschienen (201, 201'; 202, 202'; 203, 203'; 204, 204'; 205, 205'; 206, 206'; 207, 207') gegeneinander presst.

11. Stromschienensystem gemäß Anspruch 10, bei dem erste Stromschienen (101, 101'; 102, 102'; 103, 103'; 104, 104') und zweite Stromschienen (201, 201'; 202, 202'; 203, 203'; 204, 204'; 205, 205'; 206, 206'; 207, 207') der jeweiligen Segmente (701; 702) durch jeweils eine einzige Bolzenverbindung verbunden werden.

12. Stromschienensystem gemäß Anspruch 1, bei dem die Abdeckung (650) nur an den von der Befestigung des Stromschienensystems abgewandten Seiten der Segmente (701; 702) angebracht ist.

13. Stromschienensystem gemäß einem der vorherigen Ansprüche mit ersten Stromschienen (101; 102; 103; 104; 105; 106; 107) und zweiten Stromschienen (201; 202; 203; 204; 205; 206; 207), wobei das Stromschienensystem zusätzlich einen Adapter (900) umfasst, der die ersten Stromschienen (101; 102; 103; 104; 105; 106; 107) mit einem ersten, externen Stromschienensystem (910) und die zweiten Stromschienen (201; 202; 203; 204; 205; 206; 207) mit einem zweiten, externen Stromschienensystem (920) verbinden kann.

14. Stromschienensystem gemäß Anspruch 13, bei dem der Adapter (900) ausgebildet ist, parallel zueinander verlaufende erste und zweite Stromschienen rechtwinklig mit den Stromschienen der ersten und zweiten externen Stromschienensysteme zu verbinden.
